# EUROPÄISCHE PATENTSCHRIFT

(11) **EP 0 711 940 B1**
(45) Veröffentlichungstag und Bekanntmachung des Hinweises auf die Patenterteilung: **21.07.1999**
(21) Anmeldenummer: 95101345.7
(22) Anmeldetag: 01.02.1995
(51) Int. Cl.: F16K 1/44

(54) **Verfahren zum leckagefreien Schalten eines Doppelsitzventils und Dichtungsanordnung zur Durchführung des Verfahrens**
Method for a leak-free operation of a double-seat valve, sealing arrangement therefore
Méthode pour manoeuvrer sans fuites une vanne à double siège; dispositif d'étanchéité utilisable à cet effet

(30) Priorität: 20.09.1994 WO PCT/EP94/03147
(43) Veröffentlichungstag der Anmeldung: 15.05.1996
(73) Patentinhaber: TUCHENHAGEN GmbH, 21514 Büchen (DE)
(72) Erfinder: Mieth, Hans Otto, D-21514 Büchen (DE); Schreiber, Jürgen, D-23909 Ratzeburg (DE); Pawlik, Markus, D-21514 Büchen (DE)
(74) Vertreter: Glaeser, Joachim, Dipl.-Ing.

(56) Entgegenhaltungen:
- EP-A- 0 039 319
- DE-A- 3 242 947
- DE-A- 3 835 944
- GB-A- 668 563

## Beschreibung

Die Erfindung betrifft ein Verfahren zum leckagefreien Schalten eines Doppelsitzventils nach dem Oberbegriff des Anspruchs 1 und eine Dichtungsanordnung zum Durchführen des Verfahrens nach dem Oberbegriff des Anspruchs 4 oder 12.

Aus der EP 0 039 319 B1 ist eine Dichtungsanordnung bekannt, mit der näherungsweise ein Verfahren der einleitend gekennzeichneten Gattung durchgeführt werden kann, wobei diese leckagearmes und nicht leckagefreies Schalten sicherstellt. Bei der bekannten Dichtungsanordnung wird das als Schieberkolben mit radialen Dichtungsmitteln ausgebildete erste Schließglied in der Offenstellung des Doppelsitzventils im Bereich seines Endabschnittes vom zweiten Schließglied dichtend umschlossen, wobei lezteres an seinem dem Schieberkolben zugewandten Ende eine Ausnehmung mit einer im wesentlichen zylindrischen Umfangswand besitzt, die dimensioniert ist, um während der Öffnungsbewegung und in der Offenstellung den Endabschnitt des Schieberkolbens dichtend aufzunehmen, bevor das zweite Schließglied öffnet. In der Schließstellung des Doppelsitzventils findet der Schieberkolben mit seinen radialen Dichtungsmitteln in einem zylindrischen Ventilsitz Aufnahme. Dabei ist vorgesehen, daß die zylindrische Umfangsfläche der Ausnehmung im zweiten Schließglied mit dem zylindrischen Ventilsitz fluchtet und die radialen Dichtungsmittel am Endabschnitt des Schieberkolbens so angeordnet sind, daß sie während des öffnens des Ventils von dem zylindrischen Ventilsitz in dichtende Berührung mit der fluchtenden zylindrischen Umfangswand der Ausnehmung verschoben werden, bevor der Schieberkolben gegen das zweite Schließglied zur Anlage kommt.

Die bekannte Dichtungsanordnung ist in einer bevorzugten Ausführungsform in Figur 2 der EP 0 039 319 B1 mit allen konstruktiven Details dargestellt. Wesentliches Merkmal dieser Dichtungsanordnung ist, daß die radialen Dichtungsmittel sowohl in der Schließstellung als auch während des öffnungsvorganges und in der Offenstellung des Ventils stets von einer zylindrischen Umfangswand gestützt und geschützt werden. Während des öffnens des Doppelsitzventils kommen die radialen Dichtungsmittel in Eingriff mit der Umfangswand der Ausnehmung des zweiten Schließgliedes, und auch in der Offenstellung des Ventils bleibt der Eingriff zwischen den radialen Dichtungsmitteln und der Umfangswand der Ausnehmung im zweiten Schließglied aufrechterhalten. Der Eingriff ist dabei ausschließlich kraftschlüssig, das heißt die bei der elastischen Deformation der radialen Dichtungsmittel in diesen geweckten Reaktionskräfte sorgen allein für die zwischen der Umfangswand und den radialen Dichtungsmitteln gegebene Flächenpressung, die einen Durchtritt des unter Druck an den radialen Dichtungsmitteln anstehenden Fluides in den Leckagehohlraum zwischen den beiden Schließgliedern verhindert.

Bereits aus der GB 668 563 ist ein Ventil bekannt, bei dem das in einem schieberartig ausgebildeten Schließglied angeordnete radiale Dichtungsmittel - dort handelt es sich um einen sogenannten O-Ring - bei der öffnungsbewegung des Ventils in ein als Sitzteller ausgebildetes Schließglied hineingefahren wird und in der Offenstellung des Ventils dort verbleibt. Dabei ist aus dieser älteren Druckschrift bereits bekannt, den in der Schließstellung des Ventils wirksamen zylindrischen Sitzbereich durchmessergleich mit der zylindrischen Ausnehmung im Sitzteller auszubilden. Dieses Ventil weist zwar keinen zwischen den Schließgliedern vorgesehenen Leckagehohlraum auf, und die getroffene Dichtungsanordnung dient in erster Linie dem Schutz und der Stützung der radialen Dichtungsmittel, jedoch muß der zwischen der Umfangswand des Sitztellers und den radialen Dichtungsmitteln wirksame Kraftschluß infolge Deformation der radialen Dichtungsmittel derart bemessen sein, daß kein unter Druck an diesen anstehendes Fluid in den hinter der Dichtung gelegenen Bereich der Ausnehmung im Sitzteller gelangt.

Die vorgenannten bekannten Dichtungsanordnungen weisen Nachteile auf. Zum einen ergibt sich ein Nachteil aus der Tatsache, daß die Dichtheit des Kontaktes zwischen den jeweiligen radialen Dichtungsmitteln und der zugeordneten zylindrischen Umfangswand des Schließgliedes allein aus dem Kraftschluß infolge einer begrenzten elastischen Deformierbarkeit der radialen Dichtungsmittel resultiert. Darüberhinaus ist aus Figur 2 der bevorzugten Ausführungsform der bekannten Dichtungsanordnung gemäß EP 0 039 319 B1 ersichtlich, daß beim Schließvorgang des Ventils der Aufsetzvorgang des als Sitzteller ausgebildeten Schließgliedes nicht geführt erfolgt, zumindest in Bezug auf die Zuordnung zwischen radialen Dichtungsmitteln und dem zylindrischen Ventilsitz. Dies ergibt sich daraus, daß das als Sitzteller ausgebildete Schließglied mit seinen axialen Dichtungsmitteln zunächst auf der zugeordneten Sitzfläche aufsetzt, während der Schieberkolben mit den radialen Dichtungsmitteln in der Ausnehmung verbleibt. Falls nun dabei, aus welchen Gründen auch immer und entgegen der erklärten Absicht der bevorzugten Ausführungsform, der zylindrische Ventilsitz nicht mit der zylindrischen Umfangswand der Ausnehmung, in der sich die radialen Dichtungsmittel befinden, fluchtet, werden letztere bei der weiteren Schließbewegung im Zuge des Einfahrens in den zylindrischen Ventilsitz in einer die Lebensdauer beeinträchtigenden Weise über Gebühr mechanisch beansprucht.

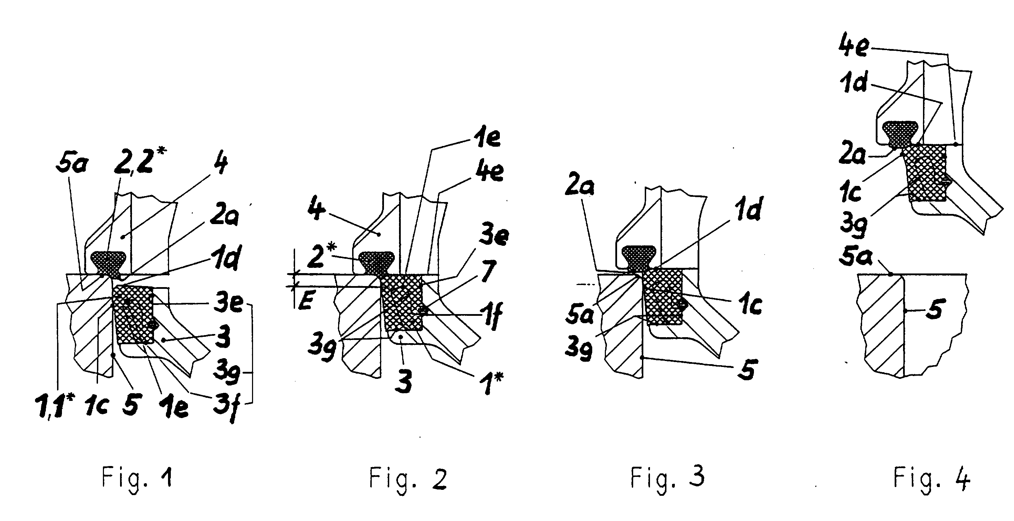

Abhilfe soll in diesem Zusammenhang die ebenfalls aus Figur 2 ersichtliche Einbettung der radialen Dichtungsmittel schaffen, die hier als sogenannter O-Ring ausgebildet sind. Die Darstellung verdeutlicht, daß der O-Ring in seiner undeformierten Einbaulage "lose" in seiner Nut angeordnet ist. Diese Anordnung hat jedoch den Nachteil, daß sich hinter der Dichtung zum Nutgrund hin geschlossene Hohlräume bilden, die außerordentlich schwer oder überhaupt nicht einer automatischen Reinigung beim Durchfluß des Reinigungsmittels durch das Ventil zugänglich sind. Mit der sog. "losen" O-Ring-Anordnung im Schließglied soll erreicht werden, daß dieser in seiner deformierten Einbaulage noch eine begrenzte Beweglichkeit innerhalb seiner Dichtungsnut aufweist, so daß er, beispielsweise im Falle eines außermittigen Aufsetzens des als Sitzteller ausgebildeten Schließgliedes, beim anschließenen Einfahren in den koaxial versetzten zylindrischen Ventilsitz begrenzt ausweichen und damit Überspannungen vermeiden und Abscherwirkungen ausweichen kann.

Ein weiterer Nachteil der bevorzugten Ausführungsform der bekannten Dichtungsanordnung besteht darin, daß diese nicht leckagefrei schaltet. Wie Fig.2 der EP 0 039 319 B1 sehr eindrucksvoll verdeutlicht, wird, nachdem die im Sitzteller angeordneten axialen Dichtungsmittel auf der zugeordneten Sitzfläche aufgesetzt haben, im Zuge der weiteren Schließbewegung beim Einfahren der radialen Dichtungsmittel in den zugeordneten zylindrischen Ventilsitz zwischen den beiden Dichtungsmitteln temporär ein Hohlraum gebildet, in dem das im Ventil vor seinem Schließen befindliche Fluid eingeschlossen ist. Nachdem die radialen Dichtungsmittel in der Schließstellung des Ventils vollständig im zylindrischen Ventilsitz Aufnahme gefunden haben, kann das zwischen den Dichtungsmitteln der beiden Schließglieder abgegrenzte Fluid in den Leckagehohlraum abströmen und über dessen Verbindung mit der Umgebung des Ventils als sogenannte Schaltleckage in Erscheinung treten.

Es hat nicht an weiteren Vorschlägen gefehlt, Dichtungsanordnungen mit radialen Dichtungsmitteln in einem schieberartig ausgebildeten Schließglied eines Doppelsitzventils vorzuschlagen, mit denen der eine oder andere vorgenannte Nachteil vermieden werden kann. In diesem Zusammenhang ist aus der DE 32 42 947 C2 eine Dichtungsanordnung bekannt, bei der zwischen den beiden jeweils konisch ausgebildete Anlageflächen aufweisenden Ventiltellern eine vorzugsweise zylindrische Ringkammer als Leckagehohlraum angeordnet ist und bei der dem ersten Ventilteller eine am Innenmantel der zylindrischen Ringkammer anliegende Dichtung zugeordnet ist, die gleichzeitig zur Abdichtung des konischen Ventilsitzes dieses Ventiltellers dient. Nach einer bevorzugten Ausführungsform dieser bekannten Dichtungsanordnung wird die am Innenmantel der zylindrischen Ringkammer anliegende Dichtung derart zwischen den Anlageflächen beider Ventilteller angeordnet, daß diese während eines Durchschaltvorganges des ersten Ventiltellers so lange im Bereich der Ringkammer verbleibt bzw. diese abdichtend durchfährt, bis zwischen dem ersten und dem zweiten Ventilteller eine den Leckagehohlraum gegenüber den Ventilräumen abdichtende Verbindung gegegen ist.

Diese letztgenannte Dichtungsanordnung vermeidet zwar Hohlraumbildungen zwischen Dichtung und zugeordneter Nut, da die Dichtung dort allseis form- und kraftschlüssig eingebettet ist, Figur 2 der DE 32 42 947 C2 verdeutlicht jedoch, daß auch diese Dichtungsanordnung nicht leckagefrei schaltet. Im Unterschied zur Dichtungsanordnung gemäß EP 0 039 319 erfolgt in der Offenstellung des Ventils gemäß DE 32 42 947 C2 die Abdichtung der Ventilinnenräume gegenüber dem Leckagehohlraum dadurch, daß der auch Schieberfunktion aufweisende erste Ventilteller mit seiner dem Leckagehohlraum zugewandten Stirnfläche an die Dichtung des zweiten Ventiltellers axial angelegt und angepreßt wird. Der erste Ventilteller ist in erster Linie ein Sitzteller, bei dem in der Schließstellung des Doppelsitzventils die Abdichtung gegenüber der zugeordneten Sitzfläche über axial wirkende Dichtungsmittel erfolgt. Im Grundsatz handelt es sich daher bei dem Doppelsitzventil gemäß DE 32 42 947 C2 und die in ihm realisierte Dichtungsanordnung um einen Gegenstand, der einer anderen Gattung als der vorliegende Anmeldungsgegenstand angehört. In gleicher Weise, wie in der Schließstellung des bekannten Ventils die Dichtwirkung zwischen der Dichtung des ersten Ventiltellers und der zugeordneten Sitzfläche durch axiales Anpressen dieser Dichtung an letztere erreicht wird, so wird auch die Dichtwirkung zwischen den beiden Ventiltellern in der Offenstellung des Ventils und in Bezug auf den Leckagehohlraum allein durch axiale Anpressung der im zweiten Ventilteller angeordneten Dichtung an die dem Leckagehohlraum zugewandte Stirnfläche des ersten Ventiltellers erreicht. Es handelt sich bei dem "axialen Andocken" der infrage kommenden Dichtung an den ersten Ventilteller um einen formschlüssigen Kontakt, dessen Flächenpressung sich im Gegensatz zum Gegenstand der EP 0 039 319 B1, wo der Kraftschluß allein aus den Deformationsmöglichkeiten der infrage kommenden Dichtung resultiert, aus der Dimensionierung des die Relativbewegung der beiden Ventilteller zueinander bestimmenden Antriebes ergibt.

Das gattungsbildende Doppelsitzventil gemäß EP 0 039 319 B1 ist im wesentlichen durch die nachfolgenden augenfälligen Merkmale gekennzeichnet:
1. In der geschlossenen Lage des Doppelsitzventils wirken die Dichtungen im Sitzteller und jene im Schieberkolben getrennt voneinander.
2. Der Sitzteller weist eine zylindrische Ausnehmung auf, in die in der Offenstellung des Ventils das radiale Dichtungsmittel des Schieberkolbens vollständig hineingefahren ist.
3. In der Offenstellung des Doppelsitzventils findet ein Zusammenwirken der radialen Dichtung mit der inneren zylindrischen Umfangswand der Ausnehmung im zweiten Schließglied, dem Sitzteller, statt. Darüber hinaus muß der Durchmesser der äußeren Umfangsfläche des Schieberkolbens zu dem Durchmesser der inneren Umfangsfläche der Ausnehmung im Sitzteller in einer funktionellen Beziehung stehen, das heißt der Durchmesser des zylindrischen Ventilsitzes ist durchmessergleich mit der inneren zylindrischen Umfangswand der Ausnehmung auszubilden, damit bei der Öffnungsbewegung und in der Offenstellung des Doppelsitzventils der Schieberkolben dichtend und näherungsweise leckagefrei schaltend Aufnahme in der Ausnehmung finden kann.
4. Die axiale Dichtung im Sitzteller ist derart angeordnet, daß sie die Ausnehmung mit Abstand umschließt.

Die vorliegende Erfindung hat sich zum Ziel gesetzt, die Standzeit von radialen Dichtungsmitteln in einem schieberartig ausgebildeten Schließglied eines Doppelsitzventils bei mikrobiologisch einwandfreier Anordnung dieser Dichtungsmittel gegenüber bekannten Lösungen zu verbessern und darüber hinaus leckagefreies Schalten sicherzustellen.

Das vorgenannte Ziel wird verfahrenstechnisch durch Anwendung der Kennzeichenmerkmale des Anspruchs 1 gelöst. Vorteilhafte Ausgestaltungen des vorgeschlagenen Verfahrens sind Gegenstand weiterer Unteransprüche. Dichtungsanordnungen zur Durchführung des vorgeschlagenen Verfahrens werden durch Anwendung der Kennzeichenmerkmale des Nebenanspruchs 4 oder 12 realisiert, während vorteilhafte Ausgestaltungen der Dichtungsanordnung Gegenstand weiterer Unteransprüche sind.

Ein wesentlicher Vorteil des Verfahrens gemäß der Erfindung besteht darin, daß einerseits die beiden Dichtungsmittel bei der Schließbewegung des Doppelsitzventils geführt auf die zugeordneten Sitzflächen aufsetzen, und daß andererseits, im Unterschied zur Dichtungsanordnung nach dem Stand der Technik, bei der Öffnungsbewegung des Ventils die radialen Dichtungsmittel in ihrem zylindrischen Ventilsitz geführt und gedichtet bleiben, während sie in einer ersten alternativen Ausgestaltung des Verfahrens über ihren Endabschnitt mit den Dichtungsmitteln im zweiten Schließglied in einen hinreichenden dichtenden Eingriff gelangen. In umgekehrter Richtung, bei der Schließbewegung, bleiben die Dichtungsmittel miteinander so lange in einem hinreichend dichten Eingriff, bis die radialen Dichtungsmittel in der zugeordneten zylindrischen Ventilsitzfläche wiederum hinreichend sicher geführt und auch abgedichtet sind.

Eine zweite vorgeschlagene Verfahrensalternative erhöht die Standzeit der Dichtungsmittel, und zwar durch Vermeidung reibender Relativbewegungen der Dichtungsmittel gegeneinander. Diese Verfahrensalternative besteht darin, daß die im zweiten Schließglied vorgesehenen Dichtungsmittel mit einem Endabschnitt des ersten Schließgliedes in einen dichtenden Eingriff gelangen und letzteren dichtend umschließen. Es liegt sowohl in Bezug auf die radialen Dichtungsmittel als auch in Bezug auf die im zweiten Schließglied vorgesehenen Dichtungsmittel stets eine Werkstoffpaarung vor, die einerseits aus Dichtungsmittel und andererseits vorzugsweise aus metallischer Sitzfläche gebildet wird.

Aus dem vorgenannten erfindungsgemäßen Grundprinzip leiten sich zwei weitere vorteilhafte Verfahrensausgestaltungen ab. Zum einen läßt sich der dichtende Eingriff zwischen den Dichtungsmitteln nicht nur kraftschlüssig vollziehen, wie dies bei bekannten Dichtungsanordnungen vorgegeben ist, sondern er kann auch zusätzlich als formschlüssiger Eingriff ausgestaltet werden. Der formschlüssige Eingriff bringt den Vorteil mit sich, daß die zwischen den Kontaktstellen der Dichtungsmittel wirkenden Kräfte nicht allein aufgrund der zulässigen Deformation des radialen Dichtungsmittels determiniert sind, sondern auch durch die über den Ventilantrieb beeinflußbare Relativbewegung der Schließglieder zueinander, wobei die Relativbewegung durch einen Anschlag zwischen den beiden Schließgliedern begrenzt wird. Dieser Anschlag ist bezüglich des formschlüssigen Eingriffs ein wünschenswerter Sicherheitsanschlag und bezüglich der kraftschlüssigen Alternative ein notwendiger Anschlag.

Eine weitere vorteilhafte Verfahrensausgestaltung realisiert zum anderen leckagefreies Schalten in einem Ausprägungsgrad, wie er mit bekannten Dichtungsanordnungen nicht erreicht werden kann. Dies gelingt dadurch, daß die radialen Dichtungsmittel im Zuge der Schließbewegung des Ventils einerseits in die zylindrische Ventilsitzfläche dichtend eingreifen, bevor die Dichtungsmittel des anderen Schließgliedes auf ihrer zugeordneten Ventilsitzfläche aufsetzen, und daß andererseits das anschließende Aufsetzen der Dichtungsmittel auf ihrer zugeordneten Ventilfläche, in radialer Richtung gesehen, innen beginnt und von dort nach außen bis zu einer Endlage der Dichtungsmittel auf der Ventilsitzfläche radial fortschreitet. Dabei wird das zwischen der Sitzfläche und dem in Frage kommenden Dichtungsmittel befindliche Fluid von innen nach außen radial fortschreitend aus dem Sitzflächenbereich verdrängt, wobei ein Einschließen des zu verdrängenden Fluides sicher vermieden werden kann.

Zur Durchführung des Verfahrens gemäß der Erfindung werden in einer bevorzugten Ausgestaltung der Dichtungsanordnung die Dichtungsmittel im zweiten Schließglied, die in ansich bekannter Weise eine axiale Dichtfläche aufweisen, zusätzlich mit einer radialen Dichtfläche ausgestattet, wobei letztere mit der Dichtfläche der radialen Dichtungsmittel, in der Hauptsache mit deren Endabschnitt, zusammenwirkt.

Es ist vorteilhaft, die radialen Dichtungsmittel des ersten Schließgliedes mit einer konvex gewölbten Dichtfläche geringer Krümmung auszustatten. Dadurch wird erreicht, daß die radialen Dichtungsmittel einerseits im dichtenden Eingriff mit den Dichtungsmitteln des zweiten Schließgliedes stehen und andererseits innerhalb der zylindrischen Ventilsitzfläche Führung und Abdichtung finden.

Die Dichtungsanordnung zur Realisierung der zweiten Verfahrensalternative sieht vor, daß die radiale Dichtfläche des Dichtungsmittels im zweiten Schließglied mit dem Endabschnitt des ersten Schließgliedes zusammenwirkt und daß dieser Endabschnitt im Eingriff der Schließglieder miteinander von der radialen Dichtfläche dichtend umschlossen wird. Dabei erfolgt die Endlagenbegrenzung über einen zwischen den beiden Schließgliedern wirksamen Anschlag, der vorzugsweise metallisch ausgebildet ist. Diese alternative Dichtungsanordnung verleiht jedem der vorgesehenen Dichtungsmittel eine besonders hohe Standzeit, da die Werkstoffpaarung einerseits aus dem Dichtungsmittel und andererseits aus der vorzugsweise metallischen Sitzfläche besteht.

Es sei angemerkt, daß die Dichtungsmittel des zweiten Schließgliedes, soweit sie nicht den Eingriff mit dem Endabschnitt der radialen Dichtungsmittel betreffen, nicht notwendigerweise axiale Dichtungsmittel sein müssen. Das Verfahren läßt sich prinzipiell auch auf Dichtungsanordnungen anwenden, bei denen auch das zweite Schließglied als Schieberkolben mit radialen Dichtungsmitteln ausgebildet ist.

Beide Dichtungsmittel werden in vorteilhafter Weise jeweils als einstückige elastomere Dichtung ausgebildet, die form- und kraftschlüssig jeweils in einer sich zum jeweiligen Nutgrund hin erweiternden Nut eingebettet sind. Durch diese Einbettung in Form einer sogenannten Kapselung wird einerseits das Herausdrücken der Dichtung aus ihrer Nut unter der Einwirkung von Druckkräften aus dem anstehenden Fluid sicher verhindert, andererseits wird dadurch Hohlraumbildung hinter der Dichtung in Verbindung mit den sich daraus ergebenden mikrobiologischen Problemen sicher vermieden. Die in diesem Zusammenhang weiterhin vorgeschlagene Dimensionierung der radialen Dichtung des als Schieberkolben ausgebildeten Schließgliedes als großvolumiger Ring ergibt geringe Spannungen im Betrieb der Dichtung und als Folge dieses Tatbestandes geringen Verschleiß und hohe Lebensdauer für die radiale Dichtung.

Im eingebauten Zustand der radialen Dichtung weist diese einen aus ihrer Nut vorstehenden Dichtungsabschnitt auf, der, nach einer vorteilhaften Ausgestaltung der vorgeschlagenen Dichtungsanordnung, beiderseits über die Nutflanken überkragend ausgebildet werden kann, so daß dort jeweils die Möglichkeit einer Abstützung in radialer Richtung auf dem Schieberkolben besteht. Diese Abstützung ist einerseits im dichtenden Eingriff mit dem Dichtungsmittel des zweiten Schließgliedes und andererseits beim Einführen der radialen Dichtung in die zylindrische Ventilsitzfläche oder bei deren Verlassen von Vorteil, da die überkragenden Dichtungsabschnitte den Eingriffsbereich der Dichtung vergrößern, ohne daß dabei Stabilitätsprobleme eingehandelt werden.

Durch konische Verjüngung der radialen Dichtfläche der Dichtungsmittel bzw. der Dichtung des zweiten Schließgliedes, in Richtung der öffnungsbewegung des Ventils betrachtet, wird zusätzlich zum kraftschlüssigen Eingriff zwischen den Dichtungsmitteln ihr vorteilhafter formschlüssiger Eingriff verwirklicht. Die derart ausgebildete radiale Dichtfläche wirkt sozusagen als Mitnehmerschräge für die radialen Dichtungsmittel im unabhängig betätigbaren, aktiven Schieberkolben.

Wird die axiale Dichtfläche der in dem zweiten Schließglied angeordneten Dichtung, in radialer Richtung gesehen, mit einem von innen nach außen und von der zugeordneten Ventilsitzfläche wegweisenden aufsteigenden Verlauf versehen, und bildet sie darüber hinaus mit der radialen Dichtfläche eine gemeinsame umlaufende Dichtkante, so ist mit dieser Dichtungsausgestaltung ein leckagefreies Schalten in einem Grade möglich, wie es bislang mit Dichtungsanordnungen nach dem Stand der Technik nicht möglich war.

Die vorgeschlagene Dichtungsanordnung ist in besonderer Weise geeignet für Doppelsitzventile der aus der WO93/16306 bekannten Bauart, wobei eine aus Figur 3 dieser Druckschrift ersichtliche Ausführungsform mit allen Vorteilen der vorgeschlagenen Dichtungsanordnung gemäß der Erfindung ausgestattet werden kann. Die in Frage kommende Ausführungsform des bekannten Doppelsitzventils zeichnet sich dadurch aus, daß das als Sitzteller ausgebildete zweite Schließglied eine koaxial zur zylindrischen Ventilsitzfläche orientierte und durchmessergleich mit dieser ausgebildete Bohrung aufweist, wobei letztere bis in die Umgebung des Doppelsitzventils geführt ist. Eine derartige Ausgestaltung erlaubt es, das Doppelsitzventil waagerecht anzuordnen und den Leckagehohlraum vollständig rückstandsfrei zu entleeren.

Die Entleerung des Leckagehohlraumes bei waagerechter Anordnung des Doppelsitzventils wird gegenüber der durchmessergleichen Anordnung dadurch weiter erleichtert, daß die im zweiten Schließglied vorgesehene Bohrung einen größeren Durchmesser als die zylindrische Ventilsitzfläche aufweist.

Falls minimale Restmengen bei waagerechter Anordnung des Doppelsitzventils im Leckagehohlraum temporär verbleiben können, bis sie mit dem nächsten öffnungshub aus dem Bereich zwischen den beiden Dichtungsmitteln entfernt werden, sieht eine weitere Ausgestaltung der Dichtungsanordnung vor, daß der Innendurchmesser der Bohrung im zweiten Schließglied um ein doppeltes radiales Abstandsmaß a kleiner als jener der zylindrischen Ventilsitzfläche ausgebildet ist, wobei ein Abstandstandsmaß a zwischen null und 0,5 mm, vorzugsweise a = 0,2 mm, vorgesehen ist. Durch diese Maßnahme erfährt die Dichtung des zweiten Schließgliedes, in öffnungsrichtung des Doppelsitzventils gesehen, eine Stützwirkung durch die sich aus dem radialen Abstandsmaß a ergebende Durchmesserreduzierung der Bohrung, die vornehmlich im dichtenden Eingriff der Dichtungen miteinander wirksam wird.

Eine zweite, die erste Verfahrensvariante in vorteilhafter Weise realisierende Dichtungsanordnung ersetzt den bei der vorstehend erläuterten Dichtungsanordnung im wesentlichen radial orientierten Eingriff der Dichtungsmittel miteinander durch einen im wesentlichen axialen Kontakt miteinander. Diese Ausgestaltung zeichnet sich durch ein verschleißarmes Verhalten aus, sie ist darüber hinaus weniger anfällig gegen Maßabweichungen und sie besitzt mehr Verformungsreserven als die erste Dichtungsanordnung. Die radialen Dichtungsmittel sind am Ende des Endabschnittes des ersten Schließgliedes angeordnet und von einer radialen und einer axialen Dichtfläche, die ineinander übergehen, begrenzt. Eine axiale Dichtfläche des axialen Dichtungsmittels im zweiten Schließglied wirkt, in radialer Richtung gesehen, mit ihrem äußeren Teil mit der axialen Ventilsitzfläche und mit ihrem inneren Teil mit der der radialen Dichtfläche benachbarten axialen Dichtfläche zusammen. In einer bevorzugten Ausgestaltung weist das radiale Dichtungsmittel auf seiner der zylindrischen Ventilsitzfläche zugewandten Seite eine sich zum axialen Dichtungsmittel hin erweiternde Mantelfläche auf, wobei der dem axialen Dichtungsmittel benachbarte Endabschnitt derart ausgestaltet ist, daß einerseits Hohlraumbildung beim Kontakt mit dem axialen Dichtungsmittel vermieden und andererseits optimale Dicht- und Abstreifwirkung sichergestellt ist. Die Endlagenbegrenzung der beiden Schließglieder zueinander erfolgt im dichtenden Eingriff mittels eines zwischen den Schließgliedern vorgesehenen Anschlages.

Während die im zweiten Schließglied angeordnete und einstückig ausgebildete Dichtung form- und kraftschlüssig in einer sich zum Nutgrund hin erweiternden Nut eingebettet ist, hat es sich als vorteilhaft herausgestellt, wie dies eine weitere Ausgestaltung der Dichtungsanordnung vorsieht, in einer Ausnehmung des ersten Schließgliedes eine einstückig ausgebildete Dichtung anzuordnen, wobei die Ausnehmung von einer am ersten Schließglied vorgesehenen äußeren Mantelfläche und einer sich an diese anschließende Stirnfläche gebildet wird. Durch diese Anordnung am Ende des Endabschnittes des ersten Schließgliedes ist eine einfache Montage der Dichtung sichergestellt.

Die Stabilität der in der Ausnehmung angeordneten Dichtung wird dadurch verbessert, daß die Dichtung gemäß einer weiteren Ausführungsform mit einem Einlageteil versehen ist. Durch dieses wird darüber hinaus erreicht, daß die Dichtung nur in ihren für den Dichtungseingriff relevanten Bereichen eine Verformung erfährt. Um die Dichtung im ersten Schließglied einfach zu montieren und in der Ausnehmung sicher festzulegen, weist die die Ausnehmung einerseits bildende äußere Mantelfläche in einer anderen vorteilhaften Ausgestaltung der Dichtungsanordnung eine Nut auf, in die in der Einbaulage der Dichtung ein Ring eingelegt ist, der mit einem aus der Nut herausragenden Abschnitt einen innerhalb der Mantelfläche wirksamen Formschluß mit dem Einlageteil bildet.

Wird die axiale Dichtfläche des im zweiten Schließglied vorgesehenen Dichtungsmittels, in radialer Richtung gesehen, mit einem von innen nach außen aufsteigenden Verlauf versehen, dann wird beim Aufsetzen des zweiten Schließgliedes auf die zugeordnete Sitzfläche das dort befindliche Fluid in radialer Richtung nach außen verdrängt, wodurch leckagefreies Schalten begünstigt wird.

Für den Fall, daß der form- und kraftschlüssige dichtende Eingriff der Dichtungsmittel miteinander nicht ausreicht, um die Relativbewegung der beiden Schließglieder gegeneinander zu begrenzen, sieht eine weitere Ausgestaltung der Dichtungsanordnung einen Anschlag vor, der vorzugsweise metallisch ausgebildet und beispielsweise im Bereich der Schließglieder oder des Antriebs angeordnet ist.

Das vorgeschlagene Verfahren und die aus diesem resultierende Vorteile lassen sich auch mit einer Dichtungsanordnung verwirklichen, bei der die Schließglieder und die zugeordneten Dichtungsmittel jeweils einstückig ausgebildet sind, wobei der Wirkungsbereich der Dichtungsmittel elastomere Eigenschaften aufweist.

Das vorgeschlagene Verfahren wird nachfolgend an Hand der Figuren der Zeichnung im Rahmen von zwei beispielhaft ausgewählten Dichtungsanordnungen erläutert. Es zeigen
- Figur 1 bis Figur 4: Mittelschnitte durch die Schließglieder eines Doppelsitzventils im Bereich einer weiteren Dichtungsanordnung zur Durchführung der ersten Verfahrensvariante in den nachfolgenden Ventilstellungen (Schließstellung, Abholstellung, Ende oder Beginn der Abholstellung und Offenstellung des Doppelsitzventils) und
- Figur 5 bis Figur 8: Mittelschnitte durch die Schließglieder des Doppelsitzventils im Bereich einer Dichtungsanordnung zur Durchführung einer zweiten Verfahrensvariante in den vorgenannten vier Ventilstellungen.

Eine das vorgeschlagene erfindungsgemäße erste Verfahren realisierende Dichtungsanordnung zeigen die Figuren 1 bis 4. In einer Ausnehmung 3g des ersten Schließgliedes 3, die von einer äußeren Mantelfläche 3e und einer sich an diese anschließende Stirnfläche 3f gebildet wird, befindet sich ein Dichtungsmittel 1, eine mit einem Einlageteil 1e versehene einstückige Dichtung 1*. Letztere besitzt eine radiale Dichtfläche 1c, die mit der zylindrischen Ventilsitzfläche 5 zusammenwirkt und darüber hinaus eine axiale Dichtfläche 1d, wobei die beiden Dichtflächen 1c, 1d ineinander übergehen. Im zweiten Schließglied 4 ist ein axiales Dichtungsmittel 2, eine einstückige Dichtung 2*, mit einer axialen Dichtfläche 2a vorgesehen, wobei letztere, in radialer Richtung gesehen, mit ihrem äußeren Teil mit der axialen Ventilsitzfläche 5a und mit ihrem inneren Teil mit der der radialen Dichtfläche 1c benachbarten axialen Dichtfläche 1d zusammenwirkt.

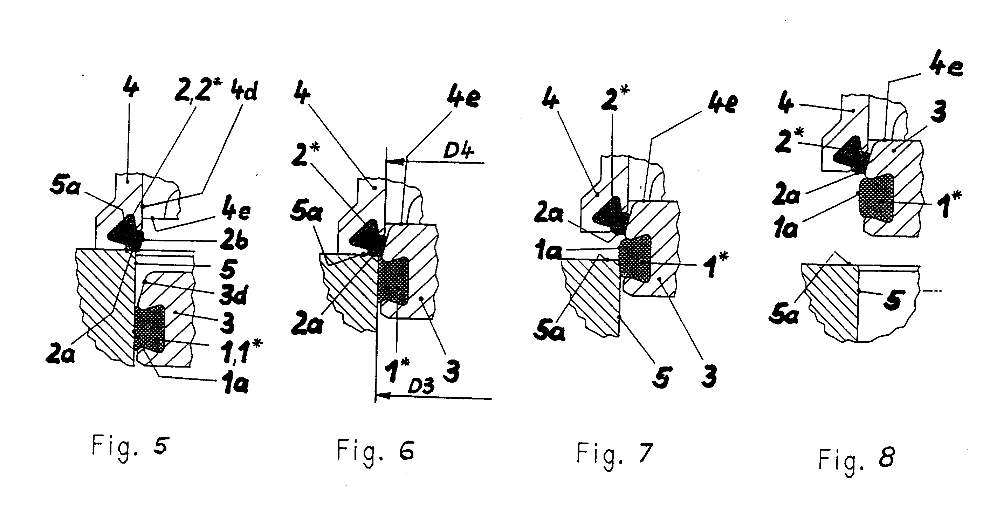

Der Bewegungsablauf, von der Schließstellung (Fig. 1) bis zur Offenstellung (Fig. 4), erklärt sich in naheliegender Weise aus den einzelnen Darstellungen, wobei die Beschreibung zu den Figuren 1 bis 4 bezüglich des Bewegungsablaufes sinngemäß auf die Figuren 5 bis 8 zu übertragen ist.

Die Figuren 2, 3 und 4 zeigen den öffnungsvorgang des Doppelsitzventils. In Figur 2 ist der Schieberkolben 3 so weit in Richtung des zweiten Schließgliedes 4 verschoben, daß die radiale Dichtung 1* mit einem Endabschnitt E in dichtenden Eingriff mit der Dichtung 2* gelangt, wobei die radiale Dichtung 1* in der zylindrischen Ventilsitzfläche 5 geführt und gedichtet bleibt. Die Dichtung 2* befindet sich mit ihrer axialen Dichtfläche 2a noch auf der zugeordneten axialen Ventilsitzfläche 5a.

Nach Figur 3 hat sich das zweite Schließglied 4 mit seiner axialen Dichtfläche 2a um einen Teilhub von der axialen Ventilsitzfläche 5a entfernt, wobei der dichtende Eingriff der Dichtungen 1*, 2* miteinander weiterhin besteht.

Figur 4 zeigt die volle Offenstellung des Doppelsitzventils mit dem Vollhub, wobei der Endabschnitt E der radialen Dichtung 1* von der Dichtung 2* innenseits dichtend umschlossen ist und weiterhin über die gesamte Zeitdauer der Offenstellung umschlossen bleibt.

Die radiale Dichtung 1* ist form- und kraftschlüssig in einer Nut eingebettet, die sich, ausgehend von zur zylindrischen Mantelfläche des Schieberkolbens 3 abgerundeten Nutflanken, zum Nutgrund hin erweitert. Eine ebensolche Einbettung oder auch Kapselung ist auch für die Dichtung 2* vorgesehen. Die dargestellte Einbettung der Dichtungen 1* und 2* in ihre Nut vermeidet Hohlraumbildung hinter der jeweiligen Dichtung und verhindert ein Herausdrücken der Dichtung aus ihrer Dichtungsnut unter dem Einfluß von Fluiddrücken.

In der Abholstellung (Fig. 2) erkennt man, daß das erste Schließglied 3 an einem am zweiten Schließglied 4 vorgesehenen Anschlag 4e zur Anlage gelangt ist. Die Ausnehmung 3g kann, für sich gesehen, eine formschlüssige Einbettung der Dichtung 1* nicht sicherstellen, wenn, wie dies vorgesehen ist, die äußere Mantelfläche 3e zum Zwekke einer einfachen Montage der Dichtung 1* im wesentlichen zylindrisch ausgebildet ist. Um einen wirksamen Formschluß zu erreichen, sieht die vorgeschlagene Anordnung eine in der äußeren Mantelfläche 3e angeordnete Nut 1f vor, in der in der Einbaulage der Dichtung 1* ein Ring 7 angeordnet ist, der mit einem aus der Nut 1f herausragenden Abschnitt einen innerhalb der Mantelfläche 3e wirksamen Formschluß mit dem Einlageteil 1e bildet. Zum Zwecke der Montage muß der Ring 7 in Verbindung mit der ihn umschließenden Dichtung 1* so weit gedehnt werden, daß er über die äußere Mantelfläche 3e hinweggleitet und dann im Bereich der Nut 1f in diese einschnappt. Eine Demontage der Dichtung 1* ist allerdings nur durch deren Zerstörung möglich.

Die Dichtungsanordnung gemäß den Figuren 5 bis 8 unterscheidet sich von jener gemäß den Figuren 1 bis 4 im wesentlichen dadurch, daß die beiden Dichtungsmittel 1,1* und 2,2* nicht unmittelbar miteinander in Eingriff gelangen. Vielmehr umschließt im Eingriff der Schließglieder 3, 4 miteinander die radiale Dichtfläche 2b des axialen Dichtungsmittels 2 den Endabschnitt 3d des ersten Schließgliedes 3. In der Abholstellung (Fig. 6), wenn das zweite Schließglied 4 mit der axialen Dichtfläche 2a seines axialen Dichtungsmittels 2 gerade die zugeordnete axiale Ventilsitzfläche 5a verläßt, kommt das erste Schließglied 3 über einen Anschlag 4e am zweiten Schließgliedes 4 zur Anlage. Der weitere Bewegungsablauf, von der Abholstellung (Fig. 6) bis zur vollen Offenstellung (Fig. 8) erklärt sich aus den vorliegenden Darstellungen. Die vorstehende Dichtungsanordnung zeichnet sich durch besonders hohe Standzeit aus, da sie eine gegenseitige Relativbewegung der Dichtungsmittel 1,2 im Zuge des Eingriffs der Schließglieder 3, 4 miteinander vermeidet.

In Figur 6 ist weiterhin dargestellt, daß das zweite Schließglied 4 eine koaxial zur zylindrischen Ventilsitzfläche 5 orientierte Bohrung 4d aufweist, deren Innendurchmesser D4 um das doppelte eines dargestellten radialen Abstandsmaßes a kleiner als der Durchmesser D3 der zylindrischen Ventilsitzfläche 5 ausgebildet ist. Das radiale Abstandsmaß a wird im Bereich zwischen null und 0,5 mm gewählt, wobei sich ein Wert a = 0,2 mm als besonders vorteilhaft erwiesen hat. Durch die Reduzierung des Innendurchmessers der Bohrung 4d wird die Dichtung 2* im Bereich der infrage kommenden Nutflanke, insbesondere im dichtenden Eingriff mit der radialen Dichtung 1*, vorteilhaft gestützt. Falls ein einwandfreies Leerlaufen des Leckagehohlraumes 6 bei waagerechter Anordnung des Doppelsitzventils vorrangig zu verwirklichen ist, wird Durchmessergleichheit (D3 = D4) vorgesehen.

Auf die Möglichkeit, die Schließglieder 3, 4 und die zugeordneten Dichtungsmittel 1 bzw. 2 jeweils einstückig auszubilden, wobei der Wirkungsbereich der Dichtungsmittel 1,2 elastomere Eigenschaften aufweist, wurde vorstehend bereits hingewiesen. Mit Ausnahme der sich aus der Einbettung eigenständiger Dichtungen 1*, 2* in ihre jeweiligen Nuten ergebenden Gestaltungsmaßnahmen und -notwendigkeiten weist eine derartige einstückige Ausgestaltung verfahrenstechnische Vorteile auf, die mit jenen der vorstehend beschriebenen Dichtungsanordnung vergleichbar sind. Die nach außen gerichtete geometrische Gestaltungsform der Dichtungsmittel bleibt durch die einstückige Ausgestaltung weitestgehend unberührt.

## Patentansprüche

1. Verfahren zum leckagefeien Schalten eines Doppelsitzventils, bei dem in einem schieberartig ausgebildeten Schließglied radiale Dichtungsmittel zur Anwendung kommen, mit einem in Reihe zum schieberartig ausgebildeten ersten Schließglied (3) und relativ beweglich zu diesem angeordneten zweiten Schließglied (4), wobei beide Schließglieder (3,4) in der Schließstellung des Ventils das Überströmen von Fluiden von einem ersten Ventilgehäuseteil in ein zweites verhindern und sowohl in der Schließ- als auch in der Offenstellung einen Leckagehohlraum (6) begrenzen, der mit der Umgebung des Ventils verbunden ist und wobei das erste Schließglied (3) mit seinen radialen Dichtungsmitteln (1)
- in der Schließstellung innerhalb einer im wesentlichen zylindrischen Ventilsitzfläche (5) dichtend Aufnahme findet,
- in der Offenstellung gegen das zweite Schließglied (4) abgedichtet ist und
- bei seiner öffnungsbewegung am zweiten Schließglied (4) dichtend zum Eingriff kommt, bevor dieses öffnet,
**dadurch gekennzeichnet**, daß die radialen Dichtungsmittel (1) derart angeordnet sind, daß sie im Zuge des öffnens des Ventils einerseits in der zylindrischen Ventilsitzfläche (5) geführt und gedichtet bleiben, während im zweiten Schließglied (4) vorgesehene Dichtungsmittel (2) entweder mit einem Endabschnitt (E) der radialen Dichtungsmittel (1) oder mit einem Endabschnitt (3d) des ersten Schließgliedes (3) in einen dichtenden Eingriff gelangen und daß der jeweilige Endabschnitt (E) bzw. (3d) bei der weiteren öffnungsbewegung und in der anschließenden Offenstellung von den im zweiten Schließglied (4) vorgesehenen Dichtungsmitteln (2) dichtend umschlossen ist.

2. Verfahren nach Anspruch 1, **dadurch gekennzeichnet**, daß sich der dichtende Eingriff zwischen den Dichtungsmitteln (1,2) bzw. zwischen den Dichtungsmitteln (2) und dem ersten Schließglied (3) form- und/oder kraftschlüssig vollzieht und daß der Eingriff durch einen die Relativbewegung der Schließglieder (3,4) zueinander bestimmenden Anschlag begrenzt wird.

3. Verfahren nach Anspruch 1 oder 2, **dadurch gekennzeichnet**, daß das Aufsetzen der Dichtungsmittel (2) auf ihrer zugeordneten Ventilsitzfläche (5a), in radialer Richtung gesehen, innen beginnt und von dort nach außen bis zu einer Endlage der Dichtungsmittel (2) auf der Ventilsitzfläche (5a) radial fortschreitet.

4. Dichtungsanordnung zum Durchführen des Verfahrens nach einem der Ansprüche 1 bis 3 in einem Doppelsitzventil mit zwei in Reihe angeordneten, relativ zueinander bewegbaren Schließgliedern (3,4), die in der Schließstellung des Ventils das überströmen von Fluiden von einem ersten Ventilgehäuseteil in ein zweites verhindern und die sowohl in der Schließ- als auch in der Offenstellung einen Leckagehohlraum (6) begrenzen, der mit der Umgebung des Ventils verbunden ist, mit einem als Schieberkolben mit radialen Dichtungsmitteln (1) ausgebildeten ersten Schließglied (3) und einem als Sitzteller mit axialen Dichtungsmitteln (2) ausgebildeten zweiten Schließglied (4), wobei der Schieberkolben (3)
- in der Schließstellung innerhalb einer im wesentlichen zylindrischen Ventilsitzfläche (5) dichtend Aufnahme findet,
- in der Offenstellung gegen das zweite Schließglied (4) abgedichtet ist und
- bei seiner Öffnungsbewegung am zweiten Schließglied (4) dichtend zum Eingriff kommt, bevor dieses öffnet,
**dadurch gekennzeichnet**, daß die axialen Dichtungsmittel (2) eine mit einer axialen Ventilsitzfläche (5a) zusammenwirkende axiale Dichtfläche (2a) und zusätzlich eine mit dem Endabschnitt (E) einer Dichtfläche (1c;1a) des radialen Dichtungsmittels (1) oder dem Endabschnitt (3d) des ersten Schließgliedes (3) zusammenwirkende radiale Dichtfläche (2b) aufweisen und daß im Eingriff der Schließglieder (3,4) miteinander die radiale Dichtfläche (2b) den jeweiligen Endabschnitt (E) bzw. (3d) dichtend umschließt.

5. Dichtungsanordnung nach Anspruch 4, **dadurch gekennzeichnet**, daß die radialen Dichtungsmittel (1) eine konvex gewölbte Dichtfläche (1a) mit geringer Krümmung aufweisen.

6. Dichtungsanordnung nach Anspruch 4 oder 5, **dadurch gekennzeichnet,** daß die Dichtungsmittel (1,2) jeweils als einstückige elastomere Dichtung (1* bzw. 2*) ausgebildet sind, die form- und kraftschlüssig jeweils in einer sich zum jeweiligen Nutgrund hin erweiternden Nut eingebettet sind und daß die Dichtung (1*) als großvolumiger Ring ausgebildet ist.

7. Dichtungsanordnung nach Anspruch 6, **dadurch gekennzeichnet,** daß die Dichtung (1*) mit einem aus ihrer Nut vorstehenden Abschnitt (1b) beiderseits über die Nutflanken überkragt und sich dort in radialer Richtung auf dem Schieberkolben (3) jeweils abstützt.

8. Dichtungsanordnung nach einem der Ansprüche 4 bis 7, **dadurch gekennzeichnet**, daß sich die radiale Dichtfläche (2b) des Dichtungsmittels (2) bzw. der Dichtung (2*), in Richtung der öffnungsbewegung des Ventils betrachtet, konisch verjüngt.

9. Dichtungsanordnung nach einem der Ansprüche 4 bis 8, **dadurch gekennzeichnet**, daß die axiale Dichtfläche (2a) des Dichtungsmittels (2) bzw. der Dichtung (2*), in radialer Richtung gesehen, einen von innen nach außen aufsteigenden Verlauf aufweist und zusammen mit der radialen Dichtfläche (2b) eine gemeinsame umlaufende Dichtkante (K) bildet.

10. Dichtungsanordnung nach einem der Ansprüche 4 bis 9, **dadurch gekennzeichnet**, daß das zweite Schließglied (4) eine koaxial zur zylindrischen Ventilsitzfläche (5) orientierte und durchmessergleich mit dieser ausgebildete Bohrung (4d) aufweist.

11. Dichtungsanordnung nach einem der Ansprüche 4 bis 10, **dadurch gekennzeichnet,** daß das zweite Schließglied (4) eine koaxial zur zylindrischen Ventilsitzfläche (5) orientierte Bohrung (4d) aufweist, deren Innendurchmesser D4 um ein doppeltes radiales Abstandsmaß a kleiner oder größer als jener der zylindrischen Ventilsitzfläche (5) ausgebildet ist, wobei 0 < a ≤ 0,5 mm, vorzugsweise a = 0,2 mm, vorgesehen ist.

12. Dichtungsanordnung zum Durchführen des Verfahrens nach einem der Ansprüche 1 bis 3 in einem Doppelsitzventil mit zwei in Reihe angeordneten, relativ zueinander bewegbaren Schließgliedern (3,4), die in der Schließstellung des Ventils das überströmen von Fluiden von einem ersten Ventilgehäuseteil in ein zweites verhindern und die sowohl in der Schließ- als auch in der Offenstellung einen Leckagehohlraum (6) begrenzen, der mit der Umgebung des Ventils verbunden ist, mit einem als Schieberkolben mit radialen Dichtungsmitteln (1) ausgebildeten ersten Schließglied (3) und einem als Sitzteller mit axialen Dichtungsmitteln (2) ausgebildeten zweiten Schließglied (4), wobei der Schieberkolben (3)
- in der Schließstellung innerhalb einer im wesentlichen zylindrischen Ventilsitzfläche (5) dichtend Aufnahme findet,
- in der Offenstellung gegen das zweite Schließglied (4) abgedichtet ist und
- bei seiner öffnungsbewegung am zweiten Schließglied (4) dichtend zum Eingriff kommt, bevor dieses öffnet,
**dadurch gekennzeichnet,** daß die radialen Dichtungsmittel (1) am Ende des Endabschnittes (3d) des ersten Schließgliedes (3) angeordnet sind und von einer radialen Dichtfläche (1c) und einer axialen Dichtfläche (1d), die ineinander übergehen, begrenzt werden, daß die radiale Dichtfläche (1c) mit der zylindrischen Ventilsitzfläche (5) zusammenwirkt, und daß eine axiale Dichtfläche (2a) des axialen Dichtungsmittels (2), in radialer Richtung gesehen, mit ihrem äußeren Teil mit einer axialen Ventilsitzfläche (5a) und mit ihrem inneren Teil mit der der radialen Dichtfläche (1c) benachbarten axialen Dichtfläche (1d) zusammenwirkt.

13. Dichtungsanordnung nach Anspruch 12, **dadurch gekennzeichnet**, daß die Dichtungsmittel (1,2) jeweils als einstückige elastomere Dichtung (1* bzw. 2*) ausgebildet sind, wobei die Dichtung (2*) form- und kraftschlüssig in einer sich zum Nutgrund (4b) hin erweiternden Nut (4a) eingebettet ist und die Dichtung (1*) das erste Schließglied (3) in einer Ausnehmung (3g), die von einer am ersten Schließglied (3) ausgebildeten äußeren Mantelfläche (3e) und einer sich an diese anschließende Stirnfläche (3f) gebildet wird, form- und kraftschlüssig umschließt.

14. Dichtungsanordnung nach Anspruch 13, **dadurch gekennzeichnet**, daß die Dichtung (1*) mit einem Einlageteil (1e) versehen ist.

15. Dichtungsanordnung nach Anspruch 13 oder 14, dadurch gekennzeichnet, daß die äußere Mantelfläche (3e) eine Nut (1e) aufweist, in der in der Einbaulage der Dichtung (1*) ein Ring (7) angeordnet ist, der mit einem aus der Nut (1f) herausragenden Abschnitt einen innerhalb der Mantelfläche (3e) wirksamen Formschluß mit dem Einlageteil (1e) bildet.

16. Dichtungsanordnung nach einem der Ansprüche 12 bis 15, **dadurch gekennzeichnet,** daß die axiale Dichtfläche (2a) des Dichtungsmittels (2) bzw. der Dichtung (2*), in radialer Richtung gesehen, einen von innen nach außen aufsteigenden Verlauf aufweist

17. Dichtungsanordnung nach einem der Ansprüche 4 bis 16, dadurch gekennzeichnet, daß die Relativbewegung der Schließglieder (3,4) gegeneinander durch einen Anschlag (4e) begrenzt ist, der erst wirksam wird, wenn die zum Vollzug der planmäßigen vollen Offenstellung des Ventils erforderliche und den form- und kraftschlüssig dichtenden Eingriff zwischen den Dichtungsmitteln (1,2) bzw. den Dichtungen (1*,2*) bestimmende Relativbewegung der Schließglieder (3,4) überschritten wird.

18. Dichtungsanordnung nach einem der Ansprüche 4 bis 17, dadurch gekennzeichnet, daß die Schließglieder (3,4) und die zugeordneten Dichtungsmittel (1 bzw. 2) jeweils einstückig ausgebildet sind und der Wirkungsbereich der Dichtungsmittel (1,2) elastomere Eigenschaften aufweist.

## Claims

1. Method for a leak-free operation of a double-seat valve, wherein radial sealing means are used in a slide-like formed closing member, with a second closing member (4) formed in series with the slide-like formed first closing member (3) and disposed movable in relation thereto, both closing members (3,4) preventing the overflow of fluids from a first valve housing portion to a second one in the closed position of the valve and defining a leakage void (6) in the closed as well as in the opened position, which is connected with the environment of the valve, and the first closing member (3) with its radial sealing means (1)
- being received in sealing manner within a substantially cylindrical valve seat surface (5) in the closed position,
- being sealed against the second closing member (4) in the opened position and
- in its opening movement engaging in sealing fashion at the second closing member (4), before this opens,
characterised in that the radial sealing means (1) are disposed such that, on one hand, they are guided in the cylindrical valve seat surface (5) and remain sealed during the opening of the valve, while sealing means (2) provided in the second closing member (4) come into sealing engagement either with an end section (E) of the radial sealing means (1) or with an end section (3d) of the first closing member (3), and that the respective end section (E) or (3d) is enclosed in sealing manner by the sealing means (2) provided in the second closing member (4) during the further opening movement and in the following opened position.

2. Method according to claim 1, characterised in that the sealing engagement between the sealing means (1,2) or between the sealing means (2) and the first closing member (3), respectively, occurs in a form-fitting and/or tensional manner and that the engagement is restricted by a stop defining the relative movement of the closing members (3,4) regarding each other.

3. Method according to claim 1 or 2, characterised in that the mounting of the sealing means (2) onto their associated valve seat surface (5a), viewed in radial direction, starts on the inside and proceeds from there radially to the outside to a final position of the sealing means (2) on the valve seat surface (5a).

4. Sealing assembly for the implementation of the method according to one of the claims 1 to 3 in a double-seat valve with two closing members (3,4), disposed in series and movable in relation to each other, which prevent the overflow of fluids from a first valve housing portion to a second one in the closed position of the valve, and which define in the closed as well as in the opened position a leakage void (6) connected with the environment of the valve, with a first closing member (3) formed as a valve piston with radial sealing means (1) and a second closing member (4) formed as valve seat with axial sealing means (2), said valve piston (3)
- being received in sealing manner within a substantially cylindrical valve seat surface (5) in the closed position,
- being sealed against the second closing member (4) in the opened position and
- in its opening movement being engaged in sealing fashion at the second closing member (4), before this opens,
characterised in that the axial sealing means (2) have an axial sealing surface (2a) co-operating with an axial valve seat surface (5a) and additionally a radial sealing surface (2b) co-operating with the end section (E) of a sealing surface (1c;1a) of the radial sealing means (1) or the end section (3d) of the first closing member (3), and that the radial sealing surface (2b) encloses the respective end section (E) or (3d), respectively, in sealing manner, during engagement of the closing members (3,4) with each other.

5. Sealing assembly according to claim 4, characterised in that the radial sealing means (1) include a convex curved sealing surface (1a) with low curvature.

6. Sealing assembly according to claim 4 or 5, characterised in that the sealing means (1,2) are each formed as an integral elastomeric seal (1* or 2*, respectively), which are each embedded in form-fitting and frictional manner in a recess expanding towards the respective recess bottom, and that the seal (1*) is formed as a ring of large volume.

7. Sealing assembly according to claim 6, characterised in that the seal (1*) overhangs over the recess flanks on both sides with a section (1b) protruding from its recess, and is supported there in radial direction on the valve piston (3).

8. Sealing assembly according to one of the claims 4 to 7, characterised in that the radial sealing surface (2b) of the sealing means (2) or the seal (2*), respectively, viewed in direction of the opening movement of the valve, tapers conically.

9. Sealing assembly according to one of the claims 4 to 8, characterised in that the axial sealing surface (2a) of the sealing means (2) or the seal (2*), respectively, viewed in radial direction, has a shape ascending from the inside to the outside and forms together with the radial sealing surface (2b) a common circumferential sealing edge (K).

10. Sealing assembly according to one of the claims 4 to 9, characterised in that the second closing member (4) includes a bore (4d) oriented coaxially to the cylindrical valve seat surface (5) and having the same diameter as said surface.

11. Sealing assembly according to one of the claims 4 to 10, characterised in that the second closing member (4) has a bore (4d) coaxially oriented to the cylindrical valve seat surface (5), the inner diameter D4 of which is smaller or larger as the one of the cylindrical valve seat surface (5) by a double radial distance extent a, wherein 0 < a ≤ 0,5 mm, preferably a = 0,2 mm, is intended.

12. Sealing assembly for the implementation of the method according to one of the claims 1 to 3 in a double-seat valve with two closing members (3,4) disposed in series, movable in relation to each other, which prevent the overflow of fluids from a first valve housing portion to a second one in the closed position of the valve, and which define in the closed as well as in the opened position a leakage void (6) connected with the environment of the valve, with a first closing member (3) formed as a valve piston with radial sealing means (1) and a second closing member (4) formed as valve seat with axial sealing means (2), said valve piston (3)
- being received in sealing manner within a substantially cylindrical valve seat surface (5) in the closed position,
- being sealed against the second closing member (4) in the opened position and
- in the opening movement being engaged in sealing fashion at the second closing member (4), before this opens,
characterised in that the radial sealing means (1) are disposed at the end of the end section (3d) of the first closing member (3) and are defined by a radial sealing surface (1c) and an axial sealing surface (1d) merging into each other, that the radial sealing surface (1c) is co-operating with the cylindrical valve seat surface (5), and that an axial sealing surface (2a) of the axial sealing means (2), viewed in radial direction, co-operates with its outer part with an axial valve seat surface (5a) and with its inner part with the axial sealing surface (1d) adjacent the radial sealing surface (1c).

13. Sealing assembly according to claim 12, characterised in that the sealing means (1,2) are formed each as an integral elastomeric seal (1* or 2*, respectively), said seal (2*) being embedded in form-fitting and frictional manner in a recess (4a) expanding towards the recess bottom (4b), and the seal (1*) encloses in a form-fitting and frictional manner the first closing member (3) in a clearance (3g) formed by an outer shell surface (3e) formed at the first closing member (3) and a front surface (3f) connected thereto.

14. Sealing assembly according to claim 13, characterised in that the seal (1*) is provided with an insertion part (1e).

15. Sealing assembly according to claim 13 or 14, characterised in that the outer shell surface (3e) includes a recess (1e), in which a ring (7) is disposed in the fitting position of the seal (1*), which forms with a section projecting from the recess (1f) a closing shape with the insertion part (1e) effective within the shell surface (3e).

16. Sealing assembly according to one of the claims 12 to 15, characterised in that the axial sealing surface (2a) of the sealing means (2) or the seal (2*), viewed in radial direction, has a shape ascending from the inside to the outside.

17. Sealing assembly according to one of the claims 4 to 16, characterised in that the relative movement of the closing members (3,4) against each other is restricted by a stop (4e), which becomes effective only at that time, when the relative movement of the closing members (3,4) required for the implementation of the planned complete opened position of the valve and determining the sealing engagement in form-fitting and frictional manner between the sealing means (1,2) or the seals (1*, 2*) respectively, is exceeded.

18. Sealing assembly according to one of the claims 4 to 17, characterised in that the closing members (3,4) and the associated sealing means (1 or 2, respectively) are each formed integrally and the effective range of the sealing means (1, 2) includes elastomeric properties.

## Revendications

1. Procédé pour commuter sans fuites une soupape à double siège, suivant lequel on utilise, dans un organe de fermeture réalisé sous la forme d'un coulisseau, des moyens d'étanchéité radiaux, un deuxième organe de fermeture (4), disposé en série avec le premier organe de fermeture (3), réalisé sous la forme d'un coulisseau, étant disposé mobile par rapport à ce dernier, les deux organes de fermeture (3, 4), dans la position de fermeture de la soupape, interdisant le débordement de fluides, d'une première partie du bâti de la soupape dans une deuxième, et délimitant, aussi bien en position de fermeture qu'en position d'ouverture, un espace vide (6) destiné aux fuites, qui est relié à l'environnement de la soupape, et le premier organe de fermeture (3), avec ses moyens d'étanchéité radiaux (1),
- faisant prise de façon étanche, en position de fermeture, à l'intérieur d'une surface (5), essentiellement cylindrique, de siège de soupape,
- étant rendu étanche, en position d'ouverture, par rapport au deuxième organe de fermeture (4), et
- venant s'engager, lors de son mouvement d'ouverture, de façon étanche, sur le deuxième organe de fermeture (4) avant que ce dernier s'ouvre,
caractérisé en ce que les moyens d'étanchéité radiaux (1) sont disposés de telle façon qu'au cours de l'ouverture de la soupape, ils restent guidés d'un côté dans la surface (5) de siège de soupape et restent étanches, tandis que des moyens d'étanchéité (2), prévus dans le deuxième organe de fermeture (4), viennent s'engager de façon étanche, soit avec une section d'extrémité (E) des moyens d'étanchéité radiaux (1), soit avec une section d'extrémité (3d) du premier organe de fermeture (3), et en ce que chacune des sections d'extrémité (E) ou (3d) considérées, lors de la poursuite du mouvement d'ouverture, puis dans la position d'ouverture qui vient ensuite, est entourée de façon étanche par les moyens d'étanchéité (2) prévus dans le deuxième organe de fermeture (4).

2. Procédé suivant la revendication 1, caractérisé en ce que l'engagement étanche entre les moyens d'étanchéité (1, 2), ou entre les moyens d'étanchéité (2) et le premier organe de fermeture (3), s'effectue complètement par conjugaison de formes et/ou de forces, et en ce que l'engagement est limité par une butée déterminant le mouvement relatif des organes de fermeture (3, 4) l'un par rapport à l'autre.

3. Procédé suivant la revendication 1 ou la revendication 2, caractérisé en ce que l'appui des moyens d'étanchéité (2) sur leur surface associée de siège de soupape (5a), commence intérieurement, en regardant dans la direction radiale, et, de là, se poursuit radialement vers l'extérieur jusqu'à une position finale des moyens d'étanchéité (2) sur la surface de siège de soupape (5a).

4. Dispositif d'étanchéité pour réaliser le procédé suivant l'une des revendications 1 à 3, dans une soupape à double siège comportant deux organes de fermeture (3, 4), disposés en série et mobiles l'un par rapport à l'autre, qui, dans la position de fermeture de la soupape, empêchent le débordement de fluides, d'une première partie du bâti de soupape dans une deuxième, et, aussi bien en position de fermeture qu'en position d'ouverture, délimitent un espace vide (6) destiné aux fuites, qui est relié à l'environnement de la soupape, un premier organe de fermeture (3), réalisé sous forme d'un piston de coulisseau, présentant des moyens d'étanchéité radiaux (1), et un deuxième organe de fermeture (4), ou avec la section d'extrémité (3d) du premier organe de fermeture (3), réalisé sous la forme d'une collerette de siège, présentant des moyens d'étanchéité axiaux (2), le piston de coulisseau (3),
- se trouvant engagé de façon étanche, en position de fermeture, à l'intérieur d'une surface (5) de siège de soupape essentiellement cylindrique,
- étant rendu étanche, en position d'ouverture, par rapport au deuxième organe de fermeture (4), et
- venant s'engager, lors de son mouvement d'ouverture, de façon étanche sur le deuxième organe de fermeture (4) avant que ce dernier s'ouvre,
caractérisé en ce que les moyens d'étanchéité axiaux (2) présentent une surface d'étanchéité axiale (2a) coopérant avec une surface axiale de siège de soupape (5a) et, de plus, présentent une surface d'étanchéité radiale (2b) coopérant avec la section d'extrémité (E) d'une surface d'étanchéité (1c; 1a) du moyen d'étanchéité radiale (1) ou avec la section d'extrémité (3d) du premier organe de fermeture (3), et en ce que, lorsque les organes de fermeture (3, 4) sont engagés l'un avec l'autre, la surface d'étanchéité radiale (2b) entoure, de façon étanche, chaque section d'extrémité correspondante (E) ou (3d) concernée.

5. Dispositif d'étanchéité suivant la revendication 4, caractérisé en ce que les moyens d'étanchéité radiaux (1) présentent une surface d'étanchéité bombée convexe (1a), comportant une faible courbure.

6. Dispositif d'étanchéité suivant la revendication 4 ou la revendication 5, caractérisé en ce que les moyens d'étanchéité (1, 2) sont chacun réalisés sous la forme d'un joint d'étanchéité en élastomère, en une seule pièce, (respectivement 1*, 2*), qui sont chacun encastrés, avec engagement par conjugaison de formes et de forces, dans une rainure allant en s'élargissant vers le fond correspondant de la rainure, et en ce que la garniture d'étanchéité (1*) est réalisée sous la forme d'une bague de grand volume.

7. Dispositif d'étanchéité suivant la revendication 6, caractérisé en ce que la garniture d'étanchéité (1*) forme une collerette des deux côtés sur les flancs de la rainure, avec une section (1b) dépassant de sa rainure, et en ce qu'elle s'y appuie, dans la direction radiale, chaque fois sur le piston (3) de coulisseau.

8. Dispositif d'étanchéité suivant l'une des revendications 4 à 7, caractérisé en ce que la surface d'étanchéité radiale (2b) du moyen d'étanchéité (2), et respectivement de la garniture d'étanchéité (2*), s'amincit en forme de cône suivant la direction du mouvement d'ouverture de la soupape.

9. Dispositif d'étanchéité suivant l'une des revendications 4 à 8, caractérisé en ce que la surface d'étanchéité axiale (2a) du moyen d'étanchéité (2), et respectivement de la garniture d'étanchéité (2*), présente, en regardant dans la direction radiale, un tracé montant depuis l'intérieur vers l'extérieur, et forme, avec la surface d'étanchéité radiale (2b), une arête d'étanchéité commune périphérique (K).

10. Dispositif d'étanchéité suivant l'une des revendications 4 à 9, caractérisé en ce que le deuxième organe de fermeture (4) présente un alésage (4d) orienté coaxialement avec la surface de siège cylindrique (5) et réalisé avec le même diamètre que celle-ci.

11. Dispositif d'étanchéité suivant l'une des revendications 4 à 10, caractérisé en ce que le deuxième organe de fermeture (4) présente un alésage (4d) orienté coaxialement avec la surface de siège cylindrique (5), cet alésage (4d) ayant un diamètre intérieur D4 plus petit ou plus grand, d'une quantité double de la distance radiale a, que celui de la surface (5) de siège de soupape, a étant prévu tel que 0 < a ≤ 0,5 mm, avec, de préférence, a = 0,2 mm.

12. Dispositif d'étanchéité pour la mise en oeuvre du procédé suivant l'une des revendications 1 à 3, dans une soupape à double siège comportant deux organes de fermeture (3, 4), disposés en série et mobiles l'un par rapport à l'autre, qui, dans la position de fermeture de la soupape, empêchent le débordement de fluides d'une première partie du bâti de soupape dans une deuxième, et, aussi bien en position de fermeture qu'en position d'ouverture, délimitent un espace vide (6) destiné aux fuites, qui est relié à l'environnement de la soupape, un premier organe de fermeture (3), réalisé sous la forme d'un piston de coulisseau (3), présentant des moyens d'étanchéité radiaux, et un deuxième organe de fermeture (4) réalisé sous la forme d'une collerette de siège présentant des moyens d'étanchéité axiaux (2), le piston de coulisseau (3)
- se trouvant engagé de façon étanche, en position de fermeture, à l'intérieur d'une surface (5) de siège de soupape essentiellement cylindrique,
- étant rendu étanche, en position d'ouverture, par rapport au deuxième organe de fermeture (4), et
- venant s'engager, lors de son mouvement d'ouverture, de façon étanche sur le deuxième organe de fermeture (4) avant que ce dernier s'ouvre,
caractérisé en ce que les moyens d'étanchéité radiaux (1) sont disposés à l'extrémité de la section d'extrémité (3d) du premier organe de fermeture (3) et sont limités par une surface d'étanchéité radiale (1c) et une surface d'étanchéité axiale (1d) qui se prolongent l'une dans l'autre, en ce que la surface d'étanchéité radiale (1c) coopère avec la surface (5) de siège de soupape, et en ce qu'une surface d'étanchéité axiale (2a) du moyen d'étanchéité axial (2), en regardant en direction axiale, coopère par sa partie extérieure avec une surface axiale de siège de soupape (5a) et par partie intérieure avec la surface d'étanchéité axiale (1d) voisine de la surface d'étanchéité radiale (1c).

13. Dispositif d'étanchéité suivant la revendication 12, caractérisé en ce que les moyens d'étanchéité (1, 2) sont chacun réalisés sous la forme d'un joint d'étanchéité en élastomère, en une seule pièce, (respectivement 1*, 2*), la garniture d'étanchéité (2*) étant encastrée, avec engagement par conjugaison de formes et de forces, dans une rainure (4a) allant en s'élargissant vers le fond (4b) de la rainure, et en ce que la garniture d'étanchéité (1*) entoure, avec un engagement par conjugaison de formes et de forces, le premier organe de fermeture (3) dans un évidement (3g) qui est formé par une surface d'enveloppe extérieure (3e) réalisée sur le premier organe de fermeture (3) et par une surface frontale (3f) se raccordant à celle-ci.

14. Dispositif d'étanchéité suivant la revendication 13, caractérisé en ce que la garniture d'étanchéité (1*) est munie d'une pièce (1e) formant insert.

15. Dispositif d'étanchéité suivant la revendication 13 ou la revendication 14, caractérisé en ce que la surface d'enveloppe extérieure (3e) présente une rainure (1e), dans laquelle, dans la position de montage de la garniture d'étanchéité (1*), est disposée une bague (7) qui forme, avec une partie dépassant hors de la rainure (1f), un engagement par conjugaison de formes avec la pièce d'insert (1e) agissant à l'intérieur de la surface d'enveloppe extérieure (3e).

16. Dispositif d'étanchéité suivant l'une des revendications 12 à 15, caractérisé en ce que la surface d'étanchéité axiale (2a) du moyen d'étanchéité (2) et respectivement de la garniture d'étanchéité (2*), en regardant dans la direction radiale, présente un tracé montant de l'intérieur vers l'extérieur.

17. Dispositif d'étanchéité suivant l'une des revendications 4 à 16, caractérisé en ce que le mouvement relatif des organes de fermeture (3, 4) l'un vers l'autre est limité par une butée (4e) qui ne devient active que quand est dépassé le mouvement relatif des deux organes de fermeture (3, 4), qui détermine l'engagement par conjugaison de formes et de forces, assurant l'étanchéité, entre respectivement les moyens d'étanchéité (1, 2) et les garnitures d'étanchéité (1*, 2*) et qui est nécessaire pour accomplir complètement la pleine ouverture programmée de la soupape.

18. Dispositif d'étanchéité suivant l'une des revendications 4 à 17, caractérisé en ce que les organes de fermeture (3, 4) et les moyens d'étanchéité associés (respectivement 1, 2) sont chacun réalisés en une seule pièce et en ce que la zone active des moyens d'étanchéité (1, 2) présente les propriétés d'un élastomère.
